# FASCICULE DE BREVET EUROPEEN

(11) **EP 3 526 662 B1**
(45) Date de publication et mention de la délivrance du brevet: **18.03.2026**
(21) Numéro de dépôt: 17793694.5
(22) Date de dépôt: 02.10.2017
(51) Int. Cl.: G06F 3/0488, G06F 3/039, G06F 3/0354

(54) **OBJET MANIPULABLE ET SUPPORT D'OBJETS MANIPULABLES**
MANIPULIERBARES OBJEKT UND HALTER FÜR MANIPULIERBARE OBJEKTE
MANIPULABLE OBJECT AND HOLDER FOR MANIPULABLE OBJECTS

(30) Priorité: 14.10.2016 FR 1659990
(43) Date de publication de la demande: 21.08.2019
(73) Titulaire: Orange, 92130 Issy-les-Moulineaux (FR)
(72) Inventeur: PELLEN, Nicolas, 92326 Châtillon Cedex (FR); GREGOIRE, Christian, 92326 Châtillon Cedex (FR); LEVASSEUR, Philippe, 92326 Châtillon Cedex (FR); LE MER, Pascal, 92326 Châtillon Cedex (FR); VUILLEMIN, Benoît, 92326 Châtillon Cedex (FR)
(86) Numéro de dépôt international: PCT/FR2017/052696
(87) Numéro de publication internationale: WO 2018/069599

(56) Documents cités:
- EP-A1- 2 187 290
- US-A1- 2006 256 090
- US-A1- 2013 249 808
- US-A1- 2013 267 322
- US-A1- 2014 340 322

## Description

L'invention concerne les objets manipulables relativement à une surface tactile, en particulier les pions ou boutons d'interaction avec un écran tactile.

Aujourd'hui les utilisateurs peuvent interagir avec les écrans tactiles au moyen de leurs propres doigts mais aussi suivant les technologies utilisées par ces écrans au moyen de stylets ou de pions interactifs (appelés keyPawn ou iPawn ou ePawn en anglais).

Des demandes américaines US2006256090 A1 et US2013249808 A1 proposent une couche mécanique pour surface tactile comportant un ou plusieurs actionneurs. Cette couche mécanique permet d'implémentés définitivement les actionneurs sur la surface tactile. L'inconvénient de l'implémentation définitive est que l'utilisateur ne peut pas bénéficier de la totalité de la surface tactile suivant les applications, ni changer d'actionneur en fonction de l'application utilisée.

La demande américaine US2006256090 A1 propose comme actionneur un curseur se déplaçant sur un axe sans préciser les moyens mis en œuvre pour guider l'actionneur sur cet axe.

Une demande européenne EP2187290 A1 ne propose pas de couche mécanique mais de fixer directement les actionneurs sur la surface tactile, soit sous la forme d'un bouton rotatif adhésif, soit sous la forme d'un curseur coulissant sur un support fixe. Dans le cas du curseur, le support est réalisé pour permettre un coulissement lors du déplacement horizontal du curseur par rapport à la surface tactile sans plus de précisions.

Ni la demande américaine US2006256090 A1 ni la demande européenne EP 2187290 A1 ne prévoit un curseur permettant l'utilisation de la surface tactile dans une position autre qu'horizontale. Par conséquent, si le curseur continue à être guider sur un axe donné lors de son déplacement pour une surface tactile penchée ou verticale, il ne restera pas en contact avec la surface tactile au moins dans sa partie supérieure. Cela entraînera des erreurs d'interactions voir une incapacité à interagir avec l'équipement.

De manière alternative, des pions ont été introduits d'abord dans le domaine des jeux pour introduire une troisième dimension aux jeux vidéo ou ramenés la convivialité des jeux de sociétés dans le domaine des jeux sur tablettes. Généralement, les pions d'interaction permettent d'interagir au moyen de la localisation du pion sur l'écran tactile et/ou d'un mouvement de translation sur la tablette. Pour une interaction par rotation, notamment pour interagir avec une interface circulaire tel qu'un menu circulaire ou pour modifier la valeur d'un paramètre, le pion glisse sur l'écran et entraine généralement un mouvement de rotation en plus du mouvement de rotation qui est d'autant plus important que l'angle de rotation est grand. Ce mouvement de translation induit par la rotation par l'utilisation du pion peut entrainer des erreurs d'interactions.

C'est pourquoi des boutons d'interaction ont été imaginés pour permettre éviter ces phénomènes de translation. Notamment, ces boutons d'interaction comportent une ventouse permettant de fixer le bouton à une position fixe de l'écran tactile, notamment au-dessous d'une représentation d'une interface circulaire affichée par l'écran tactile évitant ainsi toute translation du bouton lors d'une rotation de celui-ci par l'utilisateur.

Néanmoins, lorsque l'écran tactile est mis dans une position autre qu'horizontale, le pion ou le bouton aura tendance à glisser sur l'écran d'autant plus que l'angle de l'écran tactile avec l'horizontale est important. Cela amènera de nouvelles erreurs d'interaction. Et même si le bouton est adapté pour ne pas changer de position sur l'écran, la partie du bouton permettant l'interaction avec l'écran tactile aura tendance à s'éloigner de l'écran tactile dans la partie supérieure de la rotation du bouton engendrant soit des erreurs d'interaction soit des absences d'interaction suivant l'interface circulaire représentée par l'écran tactile.

Un des buts de la présente invention est de remédier à des inconvénients de l'état de la technique.

Un objet de l'invention est un système comprenant
- Un support d'objets manipulables relativement à une surface tactile, le support (2) étant positionnable relativement à une surface tactile (3) et comportant un bord d'une épaisseur donnée ; et
- Un objet manipulable comportant :
   - au moins un ergot permettant une interaction avec une surface tactile, et
une fente ayant une largeur configurée pour être supérieure ou égale à l'épaisseur du support de telle sorte que la fente est adaptée à insérer l'objet manipulable (1) sur le support (2), l'emplacement de la fente sur la hauteur de l'objet manipulable étant adapté à maintenir le au moins un ergot de l'objet manipulable en interaction avec la surface tactile.

Ainsi, le système permet à tout moment à un objet manipulable du système inséré sur un support du système d'interagir sans erreurs d'interaction avec la surface tactile quelle que soit la position de cette surface tactile relativement à l'horizontale : La surface tactile identifie toute interaction (ponctuelle ou glissée) de l'objet manipulable et une localisation non erronée de cette interaction sur la surface tactile.

Avantageusement, le au moins un ergot est conducteur.

Ainsi, le système permet une interaction précise sur une surface tactile conductrice.

Avantageusement, lorsque l'objet manipulable comporte plusieurs ergots, l'emplacement de la fente est adapté à maintenir tous les ergots de l'objet manipulable en interaction avec la surface tactile.

Ainsi, le système permet tous types d'interaction notamment des interactions glissée nécessitant un déplacement des ergots telles que la rotation.

Avantageusement, la fente est à un emplacement sur la hauteur de l'objet manipulable adapté à maintenir les ergots de l'objet manipulable en contact avec la surface tactile.

Ainsi, le système permet à tout moment d'interagir sans erreurs d'interaction avec une surface tactile nécessitant pour interagir un contact quelle que soit la position de cette surface tactile relativement à l'horizontale.

Avantageusement, l'emplacement de la fente sur la hauteur de l'objet manipulable relativement à une base de l'objet manipulable comportant les au moins un ergot et la fente est égale, lorsque le support est positionné sur une surface tactile, à la distance entre le support et la surface tactile.

Ainsi, une fois l'objet manipulable inséré, grâce à sa fente, sur le support positionné sur une surface tactile, le support plaque les ergots de l'objet manipulable contre la surface tactile maintenant en contact l'objet manipulable avec la surface tactile.

Avantageusement, l'objet manipulable comporte deux bases dont l'une comporte les ergots et une fente dont l'emplacement sur la hauteur de l'objet manipulable divise en deux parties l'objet manipulable, chaque partie comportant une base.

Ainsi, une première partie de l'objet est adaptée l'interaction avec la surface tactile, la partie avec les ergots, la deuxième partie est adapté à la manipulation par un utilisateur souhaitant interagir avec la surface tactile, et la fente permet d'insérer l'objet manipulable sur un support afin de placer l'objet manipulable en interaction avec la surface tactile quelle que soit la position de la surface tactile relativement à l'horizontale.

Avantageusement, l'objet manipulable comporte, sur une même base, deux ergots permettant de commander une rotation d'un élément d'interaction d'une interface virtuelle contrôlable au moyen de la surface tactile.

Ainsi, l'objet manipulable simule deux doigts d'une main pour interagir avec la surface tactile.

Avantageusement, la fente fait le tour de l'objet manipulable.

Ainsi, l'objet manipulable est insérable sur un support quelle que soit sa position par rapport au support à condition qu'au moins un ergot soit positionné face à la surface tactile. En outre, l'objet manipulable reste inséré sur le support quelle que soit la manipulation de celui-ci, notamment en cas de rotation.

Avantageusement, l'objet manipulable est de forme cylindrique et le au moins un ergot est placé sous l'une des bases du cylindre.

Ainsi, un mouvement, tel qu'une rotation, de l'objet manipulable relativement à la surface tactile est moins saccadée car l'utilisateur n'aura à modifié la position de sa main sur l'objet qu'au maximum de torsion de son poignet et pour repositionner ses doigts à chaque nouvelle face de l'objet manipulable.

Avantageusement, la forme de l'objet manipulable à l'intérieure de la fente est cylindrique.

Ainsi, un mouvement, tel qu'une rotation, de l'objet manipulable relativement à la surface tactile est moins saccadée car la forme cylindrique de la forme de l'axe de l'objet (forme à l'intérieure de la fente) supprime les à-coups liés au changement de face d'un axe présentant plusieurs faces (axe de forme parallélépipédique, prisme, etc.).

Avantageusement, le support d'objets manipulables comporte au moins une encoche dans laquelle la fente d'un objet manipulable est insérable.

Ainsi, pour des interactions par rotation de l'objet manipulable, l'encoche évite un glissement latéral de l'objet manipulable et donc une erreur d'interaction avec la surface tactile.

Avantageusement, la largeur de l'encoche est au moins égale à la dimension de l'objet manipulable à l'intérieur de la fente et inférieur à la dimension de l'objet manipulable à l'extérieur de la fente.

Ainsi, l'encoche complète la fente pour éviter que l'objet manipulable ne reste pas en contact avec la surface tactile puisque pour enlever le support de la fente, il faudra sortir d'abord l'objet de l'encoche.

Avantageusement, le support d'objets manipulables comporte au moins une partie avant et une partie arrière coopérant pour maintenir le support sur la surface tactile quelle que soit la position de la surface tactile.

Ainsi, le support se suffit à lui seul pour se maintenir et maintenir l'objet manipulable sur la surface tactile quelle que soit la position de la surface tactile.

Avantageusement, le support d'objets manipulables maintient en outre la surface tactile dans une position déterminée.

Ainsi, l'utilisation de la surface tactile dans une position autre que la position horizontale est possible sans support supplémentaire que le support d'objets manipulables.

Les caractéristiques et avantages de l'invention apparaîtront plus clairement à la lecture de la description, faite à titre d'exemple, et des figures s'y rapportant qui représentent :
- Figures 1a, 1b, et 1c, un schéma simplifié d'un objet manipulable selon l'invention, respectivement une vue latérale, une vue de dessous et une vue en trois dimension, dans le cas d'un objet de forme cylindrique ;
- Figures 2a, 2b, et 2c, un schéma simplifié d'un objet manipulable selon l'invention, respectivement une vue latérale, une vue de dessous et une vue en trois dimension, dans le cas d'un objet de forme prisme;
- Figures 3a et 3b, un schéma simplifié d'un objet manipulable et d'un support selon l'invention, dans le cas d'un objet avec une fente sur un coté de l'objet, respectivement vue latérale et vue de face;
- Figures 4a, 4b, 4c et 4d, un schéma simplifié d'un objet manipulable et d'un support selon l'invention, dans le cas d'un objet avec une fente sur le tour complet de l'objet, respectivement vue latérale, vue de face pour un objet de forme cylindrique, vue de face pour un objet cubique, vue de face pour un objet parallélépipédique, vue de face pour un support avec un encoche;
- Figures 5a, 5b et 5c, un schéma simplifié d'un supporte d'objets manipulables selon l'invention, respectivement avant et après l'insertion de deux objets manipulables selon l'invention, et une vue latérale ;
- Figures 6a et 6b, un schéma simplifié d'un support d'objets manipulable permettant le maintien d'une surface tactile en position respectivement semi-verticale, et verticale.

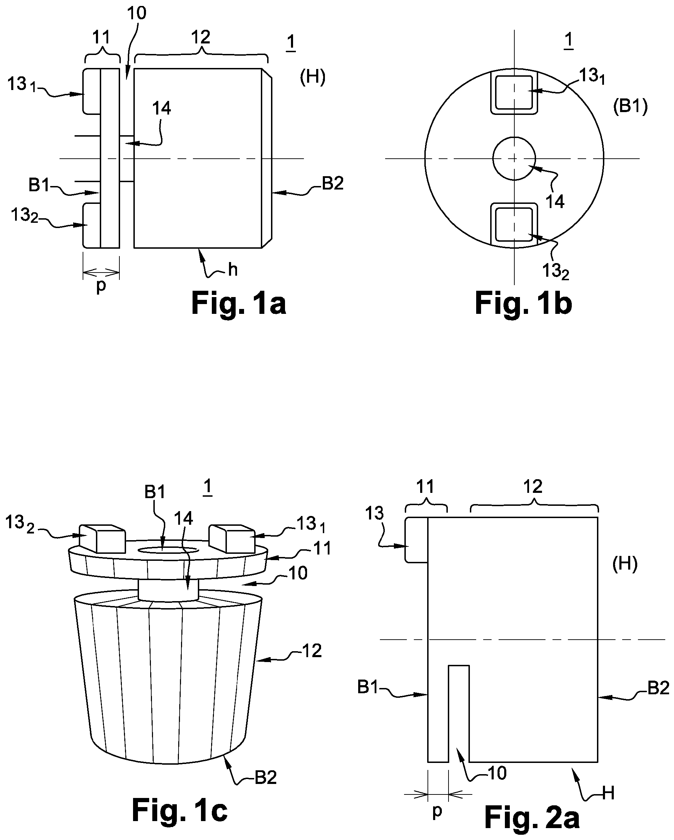

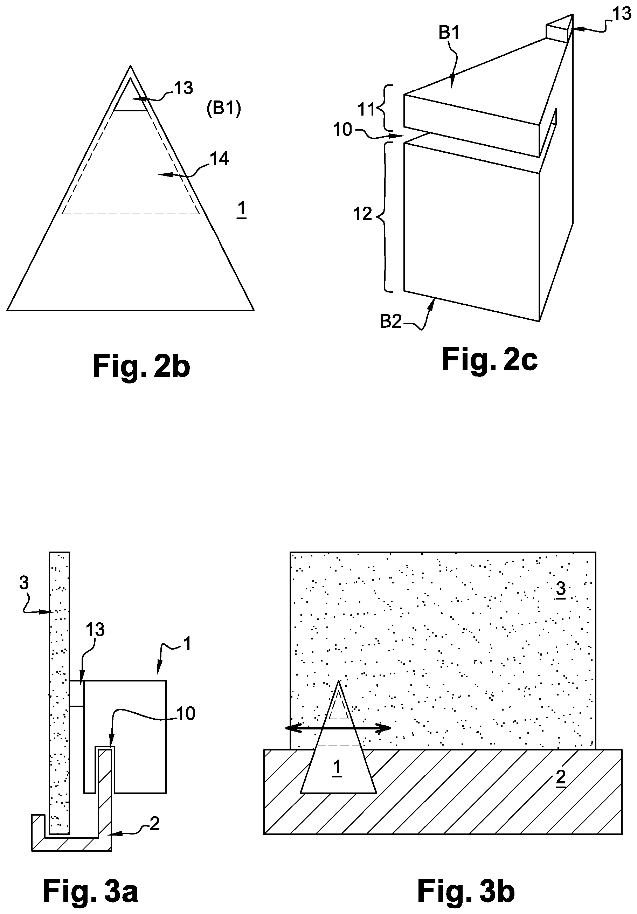

Un objet manipulable peut avoir des formes diverses comportant au moins une base :
- soit des formes simples telles qu'une forme cylindrique comme le montre les figures 1a, 1b, et 1c, la forme d'un prisme comme le montre les figures 2a, 2b, et 2c, moins aussi cubique, pavé, demi-sphérique...,
- soit des formes complexes, c'est-à-dire composé d'au moins deux formes distinctes : une demi-sphère sur un cylindre plat, un personnage sur un pavé, etc.

Les figures 1a, 1b, et 1c illustrent un schéma simplifié d'un objet manipulable selon l'invention, respectivement une vue en coupe verticale, une vue en coupe horizontale et une vue en trois dimension, dans le cas d'un objet de forme cylindrique.

Les figures 2a, 2b, et 2c illustrent un schéma simplifié d'un objet manipulable selon l'invention, respectivement une vue en coupe verticale, une vue en coupe horizontale et une vue en trois dimension, dans le cas d'un objet de forme prisme.

L'objet manipulable 1 comporte :
- au moins un ergot 13, 13₁, 13₂ permettant une interaction avec une surface tactile, et
- une fente 10 adaptée à insérer l'objet manipulable 1 sur un support positionnable relativement à la surface tactile, l'emplacement p de la fente 10 sur la hauteur H de l'objet manipulable 1 étant adapté à maintenir le au moins un ergot 13 de l'objet manipulable 1 en interaction avec la surface tactile.
Dans l'exemple des figures 1a, 1b et 1c, l'objet manipulable 1 comporte deux ergots 13₁ et 13₂. Ces ergots 13₁ et 13₂ sont placés de manière symétrique sur une des bases B1 de l'objet manipulable 1. Dans l'exemple des figures 2a, 2b et 2c, l'objet manipulable 1 comporte un seul ergot 13. Les ergots 13, 131, 132 peuvent aussi être placés de manière non symétriques.

En particulier, le au moins un ergot 13₁ et 13₂ est conducteur.

En particulier, lorsque l'objet manipulable 1 comporte plusieurs ergots comme sur les figures 1a, 1b et 1c, l'emplacement p de la fente 10 est adapté à maintenir tous les ergots 13₁ et 13₂ de l'objet manipulable 1 en interaction avec la surface tactile.

En particulier, la fente 10 est à un emplacement p sur la hauteur H de l'objet manipulable 1 adapté à maintenir les ergots 13₁ et 13₂ de l'objet manipulable 1 en contact avec la surface tactile

En particulier, l'emplacement p de la fente 10 sur la hauteur H de l'objet manipulable 1 relativement à une base B1 de l'objet manipulable 1 comportant les au moins un ergot 13₁ et 13₂, et la fente 10 est égale, lorsque le support est positionné sur une surface tactile, à la distance d entre le support et la surface tactile.

En particulier, l'objet manipulable 1 comporte :
- deux bases B1, B2 dont l'une B1 comporte les ergots 13, 13₁, 13₂ et
- une fente 10 dont l'emplacement p sur la hauteur H de l'objet manipulable 1 divise en deux parties 11, 12 l'objet manipulable 1, chaque partie 11, 12 comportant une base. B1, B2

En particulier, comme dans l'exemple des figures 1a, 1b, et 1c, l'objet manipulable 1 comporte, sur une même base B1, deux ergots 13₁, 13₂ permettant de commander une rotation d'un élément d'interaction d'une interface virtuelle contrôlable au moyen de la surface tactile.

En particulier, comme dans l'exemple des figures 1a, 1b, et 1c, la fente 10 fait le tour de l'objet manipulable comme le montre la figure 1c.

En particulier, comme dans l'exemple des figures 1a, 1b, et 1c, l'objet manipulable 1 est de forme cylindrique et le au moins un ergot 13₁, 13₂ est placé sous l'une des bases B1 du cylindre.

En particulier, comme dans l'exemple des figures 1a, 1b, et 1c, la forme de l'objet manipulable à l'intérieure de la fente 14 est cylindrique.

Les figures 1a, 1b et 1c sont plusieurs vues d'un même exemple d'objet manipulable 1 de forme simple cylindrique. La figure 1a présente une vue latérale H, c'est à dire une vue sur laquelle une hauteur h de l'objet manipulable 1 est visible. L'objet manipulable 1 est un cylindre divisé en deux parties 11 et 12 par une fente 10 faisant le tour du cylindre libérant un axe central 14 lui aussi cylindrique. Chaque partie 11, 12 a une base, respectivement B1, B2. Les deux bases B1, B2 sont parallèles. L'objet manipulable 1 comporte deux ergots 13₁, 13₂ placés sur la même base B1.

La figure 1b présente une vue de dessous du l'objet manipulable 1 de la figure 1a. Il y est visible la tranche circulaire du cylindre constituant l'objet manipulable. 1. En outre, y sont représentées les deux ergots 131 et 132 placés, de manière symétrique, sur la périphérie du cercle formant une base B1, et en transparence l'axe 14 laissé au centre de la fente 10. Ainsi, les deux ergots 131 et 132 permettent de simuler l'interaction de deux doigts avec la surface tactile et donc des gestuelles de rotation sur une surface tactile (comme l'action sur un potentiomètre pour le contrôle du volume, la sélection d'un élément dans un menu circulaire, la sélection d'une fréquence, d'une radio, etc. sur une échelle ou dans une liste, etc.).

La figure 1c montre une vue latérale en trois dimensions de l'objet manipulable 1 des figures 1a et 1b.

Les figures 2a, 2b et 2c sont plusieurs vues d'un même exemple d'objet manipulable 1 de forme simple : prisme. La figure 2a présente une vue latérale H, c'est à dire une vue sur laquelle une hauteur h de l'objet manipulable 1 est visible. L'objet manipulable 1 est un prisme divisé en deux parties 11 et 12 par une fente 10 sur un des côtés du prisme. Chaque partie 11, 12 a une base, respectivement B1, B2. Les deux bases B1, B2 sont parallèles. L'objet manipulable 1 comporte un ergot 13 placé sur la base B1.

La figure 2b présente une vue de dessous du l'objet manipulable 1 de la figure 2a. Il y est visible la tranche triangulaire du prisme constituant l'objet manipulable 1. En outre, y est représenté l'ergot 13 placé sur la périphérie du triangle formant une base B1, et en transparence la partie restante 14 de l'objet manipulable 1 laissé par la fente 10.

La figure 2c montre une vue latérale en trois dimensions de l'objet manipulable 1 des figures 2a et 2b sur laquelle est visible la fente 10 dans un premier coté et remontante sur une partie des deux autres côtés du prisme constituant l'objet manipulable 1.

Dans un mode de réalisation non illustré, les deux bases comportent des ergots : par exemple, un seul ergot sur l'une des bases pour des interactions par translation, et deux ergots sur l'autre base pour des interactions par rotation. Soit, l'objet manipulable 1 comporte une seule fente 10. Dans ce cas la hauteur de l'objet est telle que l'emplacement de la fente relativement aux deux bases est identiques permettant ainsi d'insérer l'objet sur un support dans un sens ou l'autre suivant le mode d'interaction désiré : translation, rotation, etc. Soit, l'objet manipulable 1 comporte deux fentes 10. L'emplacement de chaque fente relativement à sa base la plus proche est telle que l'objet manipulable puisse être inséré sur un support dans un sens ou l'autre suivant le mode d'interaction désiré : translation, rotation, etc.

Les figures 3a et 3b illustrent un schéma simplifié d'un objet manipulable et d'un support selon l'invention, dans le cas d'un objet avec une fente sur un coté de l'objet, respectivement vue en coupe et vue de face, tel que celui présenté par les figures 2a, 2b et 2c.

L'objet manipulable 1 comporte :
- un ergot 13 permettant une interaction avec une surface tactile 3, et
- une fente 10 adaptée à insérer l'objet manipulable 1 sur un support 2 positionnable relativement à la surface tactile3.
L'emplacement de la fente 10 sur la hauteur de l'objet manipulable 1 est adapté à maintenir l'ergot 13 de l'objet manipulable 1 en interaction avec la surface tactile 3.

En particulier, l'ergot 13 est conducteur.

En particulier, la fente 10 est à un emplacement sur la hauteur de l'objet manipulable 1 adapté à maintenir l'ergot 13 de l'objet manipulable 1 en contact avec la surface tactile 3.

En particulier, l'emplacement de la fente 10 sur la hauteur de l'objet manipulable 1 relativement à une base de l'objet manipulable 1 comportant l'ergot 13, et la fente 10 est égale, lorsque le support 2 est positionné sur une surface tactile 3, à la distance d entre le support 2 et la surface tactile 3.

Les figures 3a, et 3b sont deux vues d'un même exemple d'objet manipulable 1 de forme simple : prisme inséré sur un support 2 positionné relativement à une surface tactile 3. La figure 3a présente une vue latérale H, c'est à dire une vue sur laquelle une hauteur de l'objet manipulable 1 est visible. L'objet manipulable 1 est un prisme divisé en deux parties par une fente 10 sur un des côtés du prisme. Chaque partie comporte une base. Les deux bases sont parallèles. L'objet manipulable 1 comporte un ergot 13 placé sur l'une des bases.

Le support 2 d'objets manipulables relativement à une surface tactile est positionnable relativement à une surface tactile 3 et adapté à maintenir en interaction avec la surface tactile 3 au moins un ergot 13 d'au moins un objet manipulable 1 dont une fente10 est insérée sur le support 2.

En particulier, la figure 3a montre un support 2 en forme de gouttière dans laquelle la surface tactile 3 est placée. Au moins, l'un des côtés de la gouttière 2 est insérable dans la fente 10 de l'objet manipulable 1. Notamment, l'épaisseur de ce côté du support 2 est inférieur ou égale à la largeur de la fente 10. En particulier, le support 2 est réalisé dans un matériau suffisamment rigide pour ne pas se déformer lorsqu'il supporte un ou plusieurs objets manipulables.

La figure 3b présente une vue de face de la figure 3a, c'est-à-dire de la surface tactile 3 relativement à laquelle est positionné le support 2 sur lequel est inséré l'objet manipulable 1. Il y est visible la tranche triangulaire du prisme constituant l'objet manipulable 1. En outre, y est représenté en transparence l'ergot 13 placé sur la périphérie du triangle formant une base, et la partie restante 14 de l'objet manipulable 1 laissé par la fente 10. L'objet manipulable permet une interaction par translation par exemple sélection d'un volume, d'un contraste, d'une donnée sur une échelle ou dans une liste horizontale, etc.

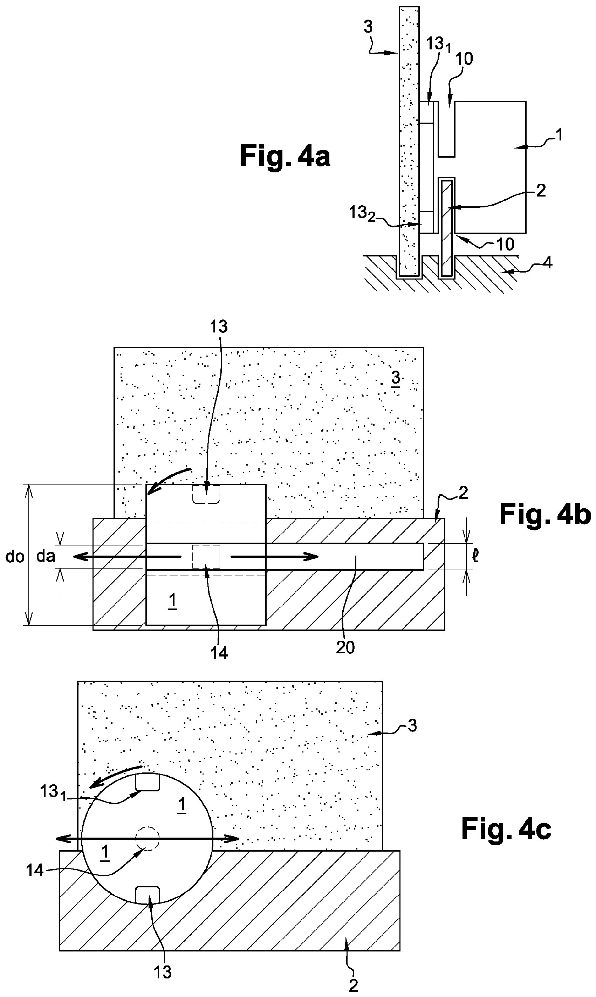

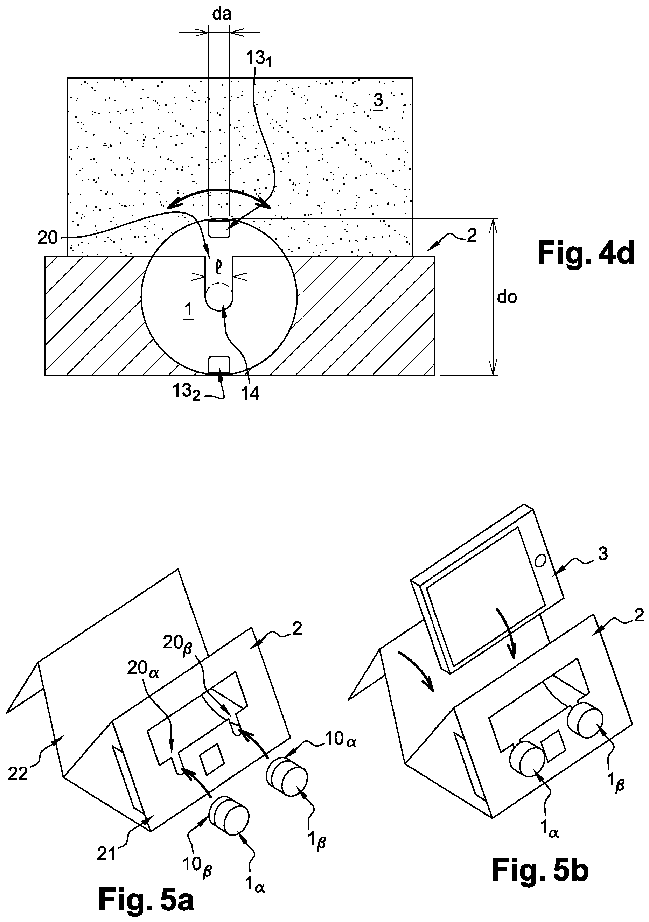

Les figures 4a, 4b, 4c et 4d illustrent un schéma simplifié d'un objet manipulable et d'un support selon l'invention, dans le cas d'un objet avec une fente sur le tour complet de l'objet, respectivement vue en coupe, vue de face pour un objet de forme cylindrique, vue de face pour un objet cubique, vue de face pour un objet parallélépipédique, vue de face pour un support avec un encoche.

L'objet manipulable 1 comporte :
- deux ergots 13₁, 13₂ permettant une interaction avec une surface tactile 3, et
- au moins une fente 10 adaptée à insérer l'objet manipulable 1 sur un support 2 positionnable relativement à la surface tactile 3.
L'emplacement de la fente 10 sur la hauteur de l'objet manipulable 1 est adapté à maintenir les ergots 13₁, 13₂ de l'objet manipulable 1 en interaction avec la surface tactile 3. Ces ergots 13₁ et 13₂ sont placés de manière symétrique sur une des bases de l'objet manipulable 1.

En particulier, les ergots 13₁ et 13₂ sont conducteurs.

En particulier, la fente 10 est à un emplacement sur la hauteur de l'objet manipulable 1 adapté à maintenir les ergots 13₁ et 13₂ de l'objet manipulable 1 en contact avec la surface tactile

En particulier, l'emplacement de la fente 10 sur la hauteur de l'objet manipulable 1 relativement à une base de l'objet manipulable 1 comportant les ergots 13₁ et 13₂, et la fente 10 est égale, lorsque le support 2 est positionné sur une surface tactile 3, à la distance d entre le support et la surface tactile.

En particulier, l'objet manipulable 1 comporte :
- deux bases dont l'une comporte les ergots 13₁, 13₂ et
- une fente 10 dont l'emplacement sur la hauteur de l'objet manipulable 1 divise en deux parties l'objet manipulable 1, chaque partie comportant une base.

En particulier, comme dans l'exemple des figures 4a à 4d, l'objet manipulable 1 comporte, sur une même base, deux ergots 13₁, 13₂ permettant de commander une rotation d'un élément d'interaction d'une interface virtuelle contrôlable au moyen de la surface tactile 3.

En particulier, comme dans l'exemple des figures 4a à 4d, la fente 10 fait le tour de l'objet manipulable 1.

Les figures 4a, et 4b sont plusieurs vues d'un même exemple d'objet manipulable 1 de forme simple cubique. La figure 4a présente une vue latérale, c'est à dire une vue sur laquelle une hauteur de l'objet manipulable 1 est visible. L'objet manipulable 1 est un cube divisé en deux parties 11 et 12 par une fente 10 faisant le tour du cube libérant un axe central 14 lui aussi cubique ou deux fentes parallèles. Chaque partie comporte une base. Les deux bases sont parallèles. L'objet manipulable 1 comporte deux ergots 13₁, 13₂ placés sur la même base.

Les figures 4a et 4b présentent une vue de face de la surface tactile 3 relativement à laquelle un support 2 est positionné sur lequel l'objet manipulable 1 de la figure 4a est inséré. Il y est visible la tranche carré du cube constituant l'objet manipulable 1. En outre, y sont représentées les deux ergots 131 et 132 placés, de manière symétrique, sur la périphérie du carré formant une base, et en transparence l'axe 14 laissé au centre de la fente 10.

L'objet manipulable qui peut être déplacé par translation ou par rotation permet les deux types d'interactions avec la surface tactile. Un axe cubique évitera une rotation inappropriée entrainant une erreur d'interaction.

En particulier, comme dans l'exemple des figures 4a, et 4b, l'objet manipulable 1 est de forme cylindrique et les ergots 13₁, 13₂ sont placés sous l'une des bases du cube.

En particulier, comme dans l'exemple des figures 4a, et 4b, la forme de l'objet manipulable à l'intérieure de la fente 14 est cylindrique.

Le support 2 d'objets manipulables relativement à une surface tactile est positionnable relativement à une surface tactile 3 et adapté à maintenir en interaction avec la surface tactile 3 au moins un ergot 13 d'au moins un objet manipulable 1 dont une fente10 est insérée sur le support 2.

En particulier, le support 2 d'objets manipulable a la forme d'une règle d'épaisseur inférieure ou égale à la largeur de la fente 10 comme le montre la figure 4a. Notamment, la règle 2 est positionnée sur un support 4 de surface tactile, tel qu'un chevalet, un étui, etc. Eventuellement, le support de surface tactile 4 comporte un emplacement dans lequel la surface tactile est insérée et un emplacement permettant de positionné un autre élément, tel qu'un filtre de protection, devant la surface tactile dans lequel le support 2 d'objets manipulables est positionné.

La figure 4b montre un support 2 d'objets manipulables sous la forme soit de deux règles qui sont assemblés en leurs extrémités une fois insérées sur un ou plusieurs objets manipulables, soit d'une règle présentant une encoche sur la longueur de la règle. L'encoche peut éventuellement être refermée afin de rigidifier la règle lors de la manipulation de l'objet manipulable.

En particulier, comme le montre la figure 4b, le support 2 est composé de deux parties sur lesquelles la ou les fentes 10 de l'objet manipulable 1 sont insérées.

Les figures 4a, 4c et 4d sont plusieurs vues d'un même exemple d'objet manipulable 1 de forme simple cylindrique. La figure 4a présente une vue latérale, c'est à dire une vue sur laquelle une hauteur de l'objet manipulable 1 est visible. L'objet manipulable 1 est un cylindre divisé en deux parties 11 et 12 par une fente 10 faisant le tour du cylindre libérant un axe central 14 lui aussi cylindrique. Chaque partie comporte une base. Les deux bases sont parallèles. L'objet manipulable 1 comporte deux ergots 13₁, 13₂ placés sur la même base B1.

Les figures 4c et 4d présentent une vue de face de la surface tactile 3 relativement à laquelle un support 2 est positionné sur lequel l'objet manipulable 1 de la figure 4a est inséré. Il y est visible la tranche circulaire du cylindre constituant l'objet manipulable 1. En outre, y sont représentées les deux ergots 131 et 132 placés, de manière symétrique, sur la périphérie du cercle formant une base, et en transparence l'axe 14 laissé au centre de la fente 10.

En particulier, comme le montre la figure 4d, le support d'objets manipulables 2 comporte au moins une encoche 20 dans laquelle la fente 10 d'un objet manipulable 1 est insérable.

En particulier, comme le montre la figure 4d, la largeur l de l'encoche 20 est au moins égale à la dimension da de l'objet manipulable 1 à l'intérieur de la fente 10 et inférieur à la dimension do de l'objet manipulable à l'extérieur de la fente.

Dans un mode de réalisation non illustrée, le support 2 d'objets manipulables est composé de deux parties : une partie rigide placée devant la surface tactile 3 supportant le ou les objets manipulables 1, et une partie élastique continuant la partie rigide à deux de ses extrémités à l'arrière de la surface tactile 3. Ainsi, le support 2 d'objets manipulables fait le tour de la surface tactile 3 s'auto-maintenant sur la surface tactile quelle que soit sa position. En outre, l'élasticité de la partie arrière du support 2 d'objets manipulables permet de maintenir le ou les objets dans lesquels le support 2 d'objets manipulables est inséré en contact avec la surface tactile 3 quelle que soit sa position.

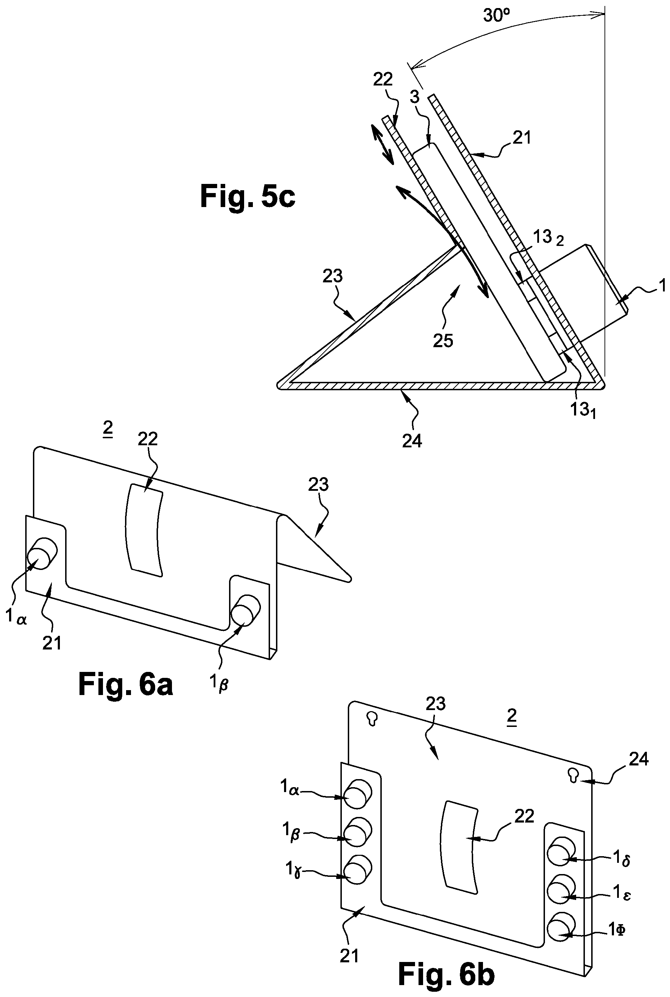

Les figures 5a, 5b et 5c illustrent un schéma simplifié d'un support d'objets manipulables selon l'invention, respectivement avant et après l'insertion de deux objets manipulables selon l'invention, et une vue en coupe.

Le support 2 d'objets manipulables illustré permet de positionner deux objets manipulables 1α et 1β en interaction avec une surface tactile 3, en l'occurrence, un smartphone avec écran tactile.

En particulier, le support 2 d'objets manipulables comporte au moins une partie avant 21 et une partie arrière 22 coopérants pour maintenir le support 2 sur la surface tactile 3 quelle que soit la position de la surface tactile 3.

En particulier, le support 2 d'objets manipulables maintient en outre la surface tactile dans une position déterminée.

Dans l'exemple des figures 5an, 5b, 5c, le support 2 d'objets manipulables comporte dans la partie placée devant la surface tactile 3 deux encoches 20α et 20β. Le support 2 est inséré au niveau de ces deux encoches 20α et 20β dans les fentes des objets manipulables 1α et 1β. Puis la surface tactile 3 est glissée derrière la partie avant 21. Afin que les objets manipulables 1α et 1β soient maintenus en interaction avec la surface tactile 3, la partie arrière 22 vient se positionner derrière la surface tactile 3 pour la maintenir la partie avant du support 2 sur la surface tactile 3. Les parties avant 21 et arrière 22 une fois refermées forment un étui pour la surface tactile.

Eventuellement, dans le cas d'une surface tactile ne nécessitant pas de contact pour interagir mais simple une faible distance avec la surface tactile, la partie avant 21 présentera une surface avec des cales qui se positionneront entre la partie avant 21 et la surface tactile 3 maintenant ainsi les objets manipulables en interaction avec la surface tactile, notamment dans le cas d'interaction par ombre.

En outre, comme le montre les figures 5a, 5b et 5c, le support 2 d'objets manipulables peut être adapté à maintenir la surface tactile dans une position faisant un angle donné avec la verticale. Par exemple, un soutien 23 permet ce maintien de position. La position du soutien 23 relativement à un meuble sur lequel est posé permet de déterminer l'angle formé entre la surface tactile et la verticale. En particulier, le support 'objets manipulables 2 comporte ce soutien 23. Afin de stabiliser le soutien 23, un reposoir 24 maintien à une position donné le soutien 23 sur un meuble (non illustré). Ainsi, le support 2 d'objets manipulables des figures 5a, 5b et 5c présente un chevalet composée d'une partie en contact avec un meuble 24, le reposoir, et d'une partie de soutien 23.

L'espace 25 restant entre l'arrière de la surface tactile 3 et le chevalet 23, 24 permet de passer éventuellement des câbles utiles à la surface tactile 3 (câbles d'alimentation, câbles de transfert de données, etc.)

En particulier, le support 2 d'objets manipulables est en carton plié.

Les figures 6a et 6b illustrent un schéma simplifié d'un support d'objets manipulable permettant le maintien d'une surface tactile en position respectivement semi-verticale, et verticale.

L'exemple de la figure 6a montre un support 2 d'objets manipulables apte à maintenir en position semi-verticale une surface tactile, c'est-à-dire un angle donné avec la verticale. Dans cet exemple, le support 2 d'objet manipulables présente une partie avant 21 uniquement en partie basse supportant deux objets manipulables 1α et 1β. La partie arrière 22 comporte une languette ressort en son centre. Les parties avant 21 et arrière 22 forme une gouttière dissymétrique dont la partie arrière 22 est plus haute que la partie avant. La languette ressort de la partie arrière 22 plaque une surface tactile placée dans cette gouttière contre la partie avant 21 mettant en interaction, voire en contact (en l'absence de cale sur la surface interne de la partie avant 21), les objets manipulables dans lesquelles le support 2 est inséré avec la surface tactile. Dans l'exemple de la figure 6a le support 2 d'objets manipulables comporte aussi une partie soutien 23 formant un angle fixe avec la partie arrière évitant ainsi une variation de position de la surface tactile durant son utilisation.

L'exemple de la figure 6b montre un support 2 d'objets manipulables apte à maintenir en position verticale une surface tactile. Dans cet exemple, le support 2 d'objet manipulables présente une partie avant 21 uniquement en partie basse supportant 6 objets manipulables 1α, 1β, 1χ, 1δ, 1ε et 1ϕ. La partie arrière comporte une languette ressort 22 en son centre. Les parties avant 21 et arrière forme une gouttière dissymétrique dont la partie arrière est plus haute que la partie avant. Les objets manipulables 1α, 1β, 1χ, 1δ, 1ε et 1ϕ sont placés sur les côtés de la partie avant remonté à droite et à gauche. La languette ressort de la partie arrière 22 plaque une surface tactile placée dans cette gouttière contre la partie avant 21 mettant en interaction, voire en contact (en l'absence de cale sur la surface interne de la partie avant 21), les objets manipulables dans lesquelles le support 2 est inséré avec la surface tactile. Dans l'exemple de la figure 6a du support 2 d'objets manipulables, la partie de soutien 23 se confond avec la partie arrière. Cette une partie soutien 23 comporte des encoches 24 permettant de fixer le support 2 d'objets manipulables à la verticale sur un meuble ou un mur.

## Revendications

1. Système comprenant :
• Un support d'objets manipulables relativement à une surface tactile, le support (2) étant positionnable relativement à une surface tactile (3) et comportant un bord d'une épaisseur donnée;
• Un objet manipulable comportant :
- au moins un ergot (13) permettant une interaction avec une surface tactile (3), et
- une fente (10) ayant une largeur configurée pour être supérieure ou égale à l'épaisseur du support (2) de telle sorte que la fente est adaptée à insérer l'objet manipulable (1) sur le support (2), l'emplacement (p) de la fente (10) sur la hauteur (h) de l'objet manipulable (1) étant adapté à maintenir le au moins un ergot (13) de l'objet manipulable en (1) interaction avec la surface tactile (3).

2. Système selon la revendication précédente, **caractérisé en ce que** le au moins un ergot (13) est conducteur.

3. Système selon l'une quelconque des revendications précédentes, **caractérisé en ce que**, lorsque l'objet manipulable (1) comporte plusieurs ergots (13₁, 13₂) , l'emplacement (p)de la fente (10) est adapté à maintenir tous les ergots (13₁, 13₂) de l'objet manipulable (1)en interaction avec la surface tactile (3).

4. Système selon l'une quelconque des revendications précédentes, caractérisé en ce l'emplacement (p) de la fente (10) sur la hauteur (h) de l'objet manipulable (1) étant adapté à maintenir les ergots (13₁, 13₂) de l'objet manipulable (1) en contact avec la surface tactile (3).

5. Système selon l'une quelconque des revendications précédentes, **caractérisé en ce que** l'emplacement (p) de la fente (10) sur la hauteur (h) de l'objet manipulable (1) relativement à une base (B1) de l'objet manipulable (1) comportant les au moins un ergot (13) et la fente (10) est égale, lorsque le support (2) est positionné sur une surface tactile (3), à la distance entre le support et la surface tactile.

6. Système selon l'une quelconque des revendications précédentes, **caractérisé en ce que** l'objet manipulable (1) comporte deux bases (B1, B2) dont l'une comporte les ergots (13₁, 13₂) et une fente (10) dont l'emplacement (p) sur la hauteur (h) de l'objet manipulable (1) divise en deux parties l'objet manipulable (1), chaque partie comportant une base.

7. Système selon l'une quelconque des revendications précédentes, **caractérisé en ce que** l'objet manipulable (1) comporte, sur une même base (B1), deux ergots (13₁, 13₂) permettant de commander une rotation d'un élément d'interaction d'une interface virtuelle contrôlable au moyen de la surface tactile (3).

8. Système selon l'une quelconque des revendications précédentes, **caractérisé en ce que** la fente (10) fait le tour de l'objet manipulable (1).

9. Système selon l'une quelconque des revendications précédentes **caractérisé en ce que** l'objet manipulable (1) est de forme cylindrique et le au moins un ergot (13) est placé sous l'une des bases du cylindre.

10. Système selon la revendication précédente, **caractérisé en ce que** la forme de l'objet manipulable (1) à l'intérieure de la fente (10) est cylindrique.

11. Système selon l'une des revendications précédentes **caractérisé en ce que** le support d'objets manipulables (2) comporte au moins une encoche (14) dans laquelle la fente (10) d'un objet manipulable (1) est insérable.

12. Système selon la revendication précédente **caractérisé en ce que** la largeur (l) de l'encoche (14) est au moins égale à la dimension (da) de l'objet manipulable (1) à l'intérieur de la fente (10) et inférieur à la dimension (do) de l'objet manipulable (1) à l'extérieur de la fente (10).

13. Système selon l'une quelconque des revendications précédentes, **caractérisé en ce que** le support d'objets manipulables (2) comporte au moins une partie avant (21) et une partie arrière (22) coopérant pour maintenir le support (2) *sur la surface tactile* (3) quelle que soit la position de la surface tactile (3).

14. Système selon l'une quelconque des revendications précédentes, **caractérisé en ce que** le support d'objets manipulables (2) maintient en outre la surface tactile (3) dans une position déterminée.

## Patentansprüche

1. System, aufweisend:
• einen Halter für manipulierbare Objekte relativ zu einer berührungsempfindlichen Oberfläche, wobei der Halter (2) relativ zu einer berührungsempfindlichen Oberfläche (3) positionierbar ist und einen Rand mit einer gegebenen Dicke umfasst;
• ein manipulierbares Objekt, umfassend:
- mindestens einen Vorsprung (13), der eine Interaktion mit einer berührungsempfindlichen Oberfläche (3) ermöglicht, und
- einen Schlitz (10) mit einer Breite, die so ausgestaltet ist, dass sie größer oder gleich der Dicke des Halters (2) ist, so dass der Schlitz dazu geeignet ist, das manipulierbare Objekt (1) in den Halter (2) einzusetzen, wobei die Lage (p) des Schlitzes (10) über die Höhe (h) des manipulierbaren Objekts (1) dazu geeignet ist, den mindestens einen Vorsprung (13) des manipulierbaren Objekts in Interaktion (1) mit der berührungsempfindlichen Oberfläche (3) zu halten.

2. System nach dem vorhergehenden Anspruch, **dadurch gekennzeichnet, dass** der mindestens eine Vorsprung (13) leitfähig ist.

3. System nach einem der vorhergehenden Ansprüche, **dadurch gekennzeichnet, dass**, wenn das manipulierbare Objekt (1) mehrere Vorsprünge (13₁, 13₂) umfasst, die Lage (p) des Schlitzes (10) dazu geeignet ist, alle Vorsprünge (13₁, 13₂) des manipulierbaren Objekts (1) in Interaktion mit der berührungsempfindlichen Oberfläche (3) zu halten.

4. System nach einem der vorhergehenden Ansprüche, **dadurch gekennzeichnet, dass** der Schlitz (10) in einer Lage (p) über die Höhe (h) des manipulierbaren Objekts ist, (1) die dazu geeignet ist, die Vorsprünge (13₁, 13₂) des manipulierbaren Objekts (1) in Kontakt mit der berührungsempfindlichen Oberfläche (3) zu halten.

5. System nach einem der vorhergehenden Ansprüche, **dadurch gekennzeichnet, dass** die Lage (p) des Schlitzes (10) über die Höhe (h) des manipulierbaren Objekts (1) relativ zu einer Basis (B1) des manipulierbaren Objekts (1), das den mindestens einen Vorsprung (13) und den Schlitz (10) umfasst, gleich dem Abstand zwischen dem Halter und der berührungsempfindlichen Oberfläche ist, wenn der Halter (2) auf einer berührungsempfindlichen Oberfläche (3) positioniert ist.

6. System nach einem der vorhergehenden Ansprüche, **dadurch gekennzeichnet, dass** das manipulierbare Objekt (1) zwei Basen (B1, B2) umfasst, von denen eine die Vorsprünge (13₁, 13₂) und einen Schlitz (10) umfasst, dessen Lage (p) über die Höhe (h) des manipulierbaren Objekts (1) das manipulierbare Objekt (1) in zwei Teile unterteilt, wobei jeder Teil eine Basis umfasst.

7. System nach einem der vorhergehenden Ansprüche, **dadurch gekennzeichnet, dass** das manipulierbare Objekt (1) auf einer selben Basis (B1) zwei Vorsprünge (13₁, 13₂) umfasst, die es ermöglichen, eine Drehung eines Interaktionselements einer mittels der berührungempfindlichen Oberfläche (3) steuerbaren virtuellen Schnittstelle zu betätigen.

8. System nach einem der vorhergehenden Ansprüche, **dadurch gekennzeichnet, dass** sich der Schlitz (10) um das manipulierbare Objekt (1) herum erstreckt.

9. System nach einem der vorhergehenden Ansprüche, **dadurch gekennzeichnet, dass** das manipulierbare Objekt (1) von zylindrischer Form ist und der mindestens eine Vorsprung (13) unter einer der Basen des Zylinders angeordnet ist.

10. System nach dem vorhergehenden Anspruch, **dadurch gekennzeichnet, dass** die Form des manipulierbaren Objekts (1) innerhalb des Schlitzes (10) zylindrisch ist.

11. System nach einem der vorhergehenden Ansprüche, **dadurch gekennzeichnet, dass** der Halter (2) für manipulierbare Objekte mindestens eine Ausnehmung (14) umfasst, in die der Schlitz (10) eines manipulierbaren Objekts (1) einführbar ist.

12. System nach dem vorhergehenden Anspruch, **dadurch gekennzeichnet, dass** die Breite (I) der Ausnehmung (14) mindestens gleich der Abmessung (da) des manipulierbaren Objekts (1) innerhalb des Schlitzes (10) und kleiner als die Abmessung (do) des manipulierbaren Objekts (1) außerhalb des Schlitzes (10) ist.

13. System nach einem der vorhergehenden Ansprüche, **dadurch gekennzeichnet, dass** der Halter (2) für manipulierbare Objekte mindestens einen vorderen Teil (21) und einen hinteren Teil (22) umfasst, die zusammenwirken, um den Halter (2) unabhängig von der Position der berührungsempfindlichen Oberfläche (3) auf der berührungsempfindlichen Oberfläche (3) zu halten.

14. System nach einem der vorhergehenden Ansprüche, **dadurch gekennzeichnet, dass** der Halter (2) für manipulierbare Objekte ferner die berührungsempfindliche Oberfläche (3) in einer bestimmten Position hält.

## Claims

1. System comprising:
• a holder for objects that can be manipulated relative to a touch-sensitive surface, the holder (2) being able to be positioned relative to a touch-sensitive surface (3) and comprising an edge of a given thickness;
• a manipulable object comprising:
- at least one lug (13) allowing interaction with a touch-sensitive surface (3), and
- a slot (10) having a width configured to be larger than or equal to the thickness of the holder (2) so that the slot is suitable for inserting the manipulable object (1) onto the holder (2), the location (p) of the slot (10) along the height (h) of the manipulable object (1) being suitable for keeping the at least one lug (13) of the manipulable object (1) in interaction with the touch-sensitive surface (3).

2. System according to the preceding claim, **characterized in that** the at least one lug (13) is conductive.

3. System according to either one of the preceding claims, **characterized in that**, when the manipulable object (1) comprises a plurality of lugs (13₁, 13₂), the location (p) of the slot (10) is suitable for keeping all of the lugs (13₁, 13₂) of the manipulable object (1) in interaction with the touch-sensitive surface (3).

4. System according to any one of the preceding claims, **characterized in that** the location (p) of the slot (10) along the height (h) of the manipulable object (1) is suitable for keeping the lugs (13₁, 13₂) of the manipulable object (1) in contact with the touch-sensitive surface (3).

5. System according to any one of the preceding claims, **characterized in that** the location (p) of the slot (10) along the height (h) of the manipulable object (1) relative to a base (B1) of the manipulable object (1) comprising the at least one lug (13) and the slot (10) is equal, when the holder (2) is positioned on a touch-sensitive surface (3), to the distance between the holder and the touch-sensitive surface.

6. System according to any one of the preceding claims, **characterized in that** the manipulable object (1) comprises two bases (B1, B2), one of which comprises the lugs (13₁, 13₂) and a slot (10), the location (p) of which along the height (h) of the manipulable object (1) divides the manipulable object (1) into two portions, each portion comprising a base.

7. System according to any one of the preceding claims, **characterized in that** the manipulable object (1) comprises, on the same base (B1), two lugs (13₁, 13₂) making it possible to control a rotation of an interaction element of a virtual interface that can be controlled by means of the touch-sensitive surface (3).

8. System according to any one of the preceding claims, **characterized in that** the slot (10) extends all the way around the manipulable object (1).

9. System according to any one of the preceding claims, **characterized in that** the manipulable object (1) is cylindrical in shape and the at least one lug (13) is situated beneath one of the bases of the cylinder.

10. System according to the preceding claim, **characterized in that** the shape of the manipulable object (1) inside the slot (10) is cylindrical.

11. System according to one of the preceding claims, **characterized in that** the manipulable object holder (2) comprises at least one notch (14) into which the slot (10) of a manipulable object (1) can be inserted.

12. System according to the preceding claim, **characterized in that** the width (I) of the notch (14) is at least equal to the dimension (da) of the manipulable object (1) inside the slot (10) and smaller than the dimension (do) of the manipulable object (1) outside the slot (10).

13. System according to any one of the preceding claims, **characterized in that** the manipulable object holder (2) comprises at least a front portion (21) and a rear portion (22) cooperating to keep the holder (2) on the touch-sensitive surface (3) regardless of the position of the touch-sensitive surface (3).

14. System according to any one of the preceding claims, **characterized in that** the manipulable object holder (2) also keeps the touch-sensitive surface (3) in a determined position.
